Europäisches Patentamt

European Patent Office

Office européen des brevets

(19)

(11) **EP 1 729 518 A1**

(12) **EUROPEAN PATENT APPLICATION**

(43) Date of publication:
06.12.2006 Bulletin 2006/49

(51) Int Cl.:
*H04N 7/26* (2006.01)   *G06F 7/544* (2006.01)

(21) Application number: 05011730.8

(22) Date of filing: 31.05.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(71) Applicant: **Novatek Microelectronics Corp.**
Hsinchu , Taiwan (TW)

(72) Inventors:
• **Yang, Hsing-Chien**
Taichung City 407,
Taiwan (CN)

• **Chen, Jin-Ming**
Taichung County 432,
Taiwan (CN)
• **Yuan, Lucian**
Hsinchu City 300,
Taiwan (CN)

(74) Representative: **Becker Kurig Straus**
Patentanwälte
Bavariastrasse 7
80336 München (DE)

Remarks:
Amended claims in accordance with Rule 86 (2) EPC.

(54) **Circuit for computing sums of absolute difference**

(57)     A circuit for computing sums of absolute difference (SAD) is provided. The circuit has an absolute difference circuit, a first adder, a first register and a first selective circuit. The absolute difference circuit receives a first data $PM_{ij}$ and a second data $PS_{ij}$ and output a absolute difference data $AD_{ij}$, wherein $AD_{ij} = |PM_{ij}-PS_{ij}|$. The first adder receives and adds the absolute difference data and a first accumulative data, and outputs a first sum. The register receives and locks the first sum according to a first preset timing sequence, and outputs a first sum of absolute difference data. The first selective circuit receives and selects the first sum of absolute difference data or 0, and outputs the selected data as the first accumulative data.

EP 1 729 518 A1

## Description

BACKGROUND OF THE INVENTION

Field of the Invention

The present invention relates to a motion estimation circuit, and more particularly to a circuit for computing sums of absolute difference (SAD).

Description of Related Art

Generally, digital visual communication carries tremendous large amount of data. In order to save into the storage space, visual communication data and the bandwidth thereof, the visual communication data should be compressed. Data compression achieves the purpose of reducing the amount of data by removing redundant data inform the visual communication data. For example, if the last frame is similar to the next frame, the parts of the next frame similar to those of the last frame are removed and the dissimilar parts of the next frame are preserved. Accordingly, the amount of the visual communication data can be substantially reduced. For example, MPEG visual data compression standard has been widely used as a visual coding method.

When the present frame and the to-be-compared frame are compared, presently, the frame is divided into a plurality of image blocks. The typical size of image blocks is $16 \times 16$ or 8x8 pixels. One of the image blocks is selected and compared with the to-be-compared frame by a searching process. In the to-be-compared frame, the block corresponding to the present image block serves as a center, and a search region composed of pixels covering a specific distance from the center is called search window. The specific distance is called a search range. In the search window, the image block is compared to each of the to-be-compared image blocks so as to determine the block that is most similar to the image block. This process is called motion estimation.

During the comparison of the present image block and the to-be-compared image blocks, the computation of SAD for these two pixels is performed. In other words, the pixel data of the image block and the to-be-compared blocks are subtracted from each other. Then the absolute values of the computed results are obtained. The accumulation of the absolute values is the SAD of the image block and the to-be-compared block. The similarity of the image block and the to-be-compared block can be determined according to SAD.

In the prior art process, after the completion of the SAD computation, the circuit has to be reset before the next SAD computation is performed. For motion estimation requiring a large number of SAD computations, the reset step consumes significant amount of the operating time.

Presently, the prior art method cannot meet the H.264 standard with 8x16, 16x8, 8x4, 4x8 and 4x4 image block data. Moreover, the prior art method can only compute for the 16x16 or 8x8 image block data, and cannot support the tree-structure motion estimation.

SUMMARY OF THE INVENTION

Accordingly, the present invention is directed to providing a circuit for computing SAD. By inputting the image block data and the to-be-compared block data once, SAD for 16x16, 16x8, 8x16, 8x8, 8x4, 4x8 and 4x4 image blocks can be computed with a parallel or sequential manner. According to an embodiment of the present invention, the circuit is capable of performing the next SAD computation without resetting the circuit. Accordingly, the operating efficiency of the circuit can be effectively improved.

According to an embodiment of the present invention, a circuit for computing the SAD comprises an absolute difference circuit, a first adder, a first register without reset function and a first selective circuit. The absolute difference circuit receives a first data $PM_{i,j}$ and a second data $PS_{i,j}$, and outputs an absolute difference data $AD_{i,j}$. $PM_{i,j}$, $PS_{i,j}$ and $AD_{i,j}$ represent a (i,j) data of the first data, the second data and the absolute difference data, respectively, wherein $AD_{i,j}=|PM_{i,j}-PS_{i,j}|$, and i and j are integers not less than 0. The first adder receives and adds the absolute difference data and a first accumulative data, and outputs a first sum. The register receives and locks the first sum according to a first preset timing sequence, and outputs a first SAD data which is an accumulation of a $4 \times 4$ array from $AD_{ij}$ to $AD_{i+3,j+3}$. The first selective circuit receives and selects the first SAD data or 0, and outputs the selected data as the first accumulative data.

According to an embodiment of the present invention, the circuit further comprises at least one set of accumulative circuits for receiving and accumulating the first SAD, so as to output a second SAD and accumulate the second SAD according to the preset timing sequence. According to an embodiment of the present invention, the first SAD is an accumulation of a $4 \times 4$ array as

$$\sum_{i=4k}^{4k+3}\sum_{j=4k}^{4k+3} AD_{i,j} \, , \, k = \{k|k = 0,1,2,3\}. \text{ The second SAD is}$$

$$\sum_{i=0}^{7}\sum_{j=0}^{3} AD_{x+i,y+j} \quad \text{where } x \in \{0,8\} y \in \{0,4,8,12\},$$

$$\sum_{i=0}^{3}\sum_{j=0}^{7} AD_{x+i,y+j} \quad \text{where } x \in \{0,4,8,12\} \ y \in \{0,8\},$$

$$\sum_{i=0}^{7}\sum_{j=0}^{7} AD_{x+i,y+j} \quad \text{where } x \in \{0,8\} \ y \in \{0,8\},$$

$$\sum_{i=0}^{15}\sum_{j=0}^{7} AD_{x+i,y+j} \quad \text{where } x \in \{0\} y \in \{0,8\} \, ,$$

$$\sum_{i=0}^{7}\sum_{j=0}^{15}AD_{x+i,y+j} \quad \text{where } x \in \{0,8\} \ y \in \{0\}, \text{ or}$$

$$\sum_{i=0}^{15}\sum_{j=0}^{15}AD_{x+i,y+j} \quad \text{where } x \in \{0\} y \in \{0\}.$$

According to an embodiment of the present invention, the accumulative circuit comprises a third adder, a third register and a third selective circuit. The third adder receives and accumulates the first sum of absolute difference data and a third accumulative data, and outputs a third accumulative value. The third register receives and locks the third accumulated value according to a third preset time sequence, outputting the second SAD. The third selective circuit receives and selects the second SAD, absolute difference or the zero data. The third accumulated value is output from the third register.

According to an embodiment of the present invention, the circuit further comprises a fourth register and a fourth selective circuit. The fourth register receives and locks the first accumulated value according to a fourth preset timing sequence, and outputs a third SAD. The fourth selective circuit is coupled between the absolute difference circuit and the first adder. The fourth selective circuit is also coupled to the fourth register for receiving and selecting the absolute difference data, the third SAD and the zero data so as to output the selected data to the first adder for adding operation with the first SAD.

According to an embodiment of the present invention, the circuit further comprises a second adder, a fifth register and a fifth selective circuit. The second adder receives and accumulates the third SAD and a fifth accumulative data so as to output a fifth accumulated value. Along the fifth preset time sequence, the fifth register receives and locks the fifth accumulated value, so as to output the fourth SAD. The fifth selective circuit receives and selects the fourth SAD or the zero data so as to output the selected data as the fifth accumulative data.

According to an embodiment of the present invention, the circuit, in sequence or in parallel, compute the SAD for 16x16, 16x8, 8x16, 8x8, 8x4, 4x8 and 4x4 image blocks by inputting the image block data and the to-be-compared block data only once. The circuit, according to the present embodiment of the present invention, may also support the processing element for tree-structure motion estimation. The circuit, according to the present embodiment of the present invention, can perform next SAD computation without resetting the absolute difference circuit. Accordingly, the operating efficiency of the circuit can be effectively improved.

The above and other features of the present invention will be better understood from the following detailed description of the preferred embodiments of the invention that is provided in communication with the accompanying drawings.

BRIEF DESCRIPTION OF THE DRAWINGS

FIG. 1 is a schematic circuit block diagram showing a circuit for computing SAD in accordance with a preferred embodiment of the invention.

FIG. 2A is a view showing computation of absolute difference of an image block data and a to-be-compared image block data according to an embodiment of the present invention.

FIG. 2B illustrates an order of processing 4x4 pixel blocks. We can obtain all SAD values with inputting $PM_{i,j}$ and $PS_{i,j}$ once in the order.

FIG. 3 is a schematic circuit block diagram showing a circuit for computing SAD according to another preferred embodiment of the invention.

FIG. 4 is a schematic circuit block diagram showing a circuit for computing SAD according to third preferred embodiment of the invention.

DESCRIPTION OF EMBODIMENTS

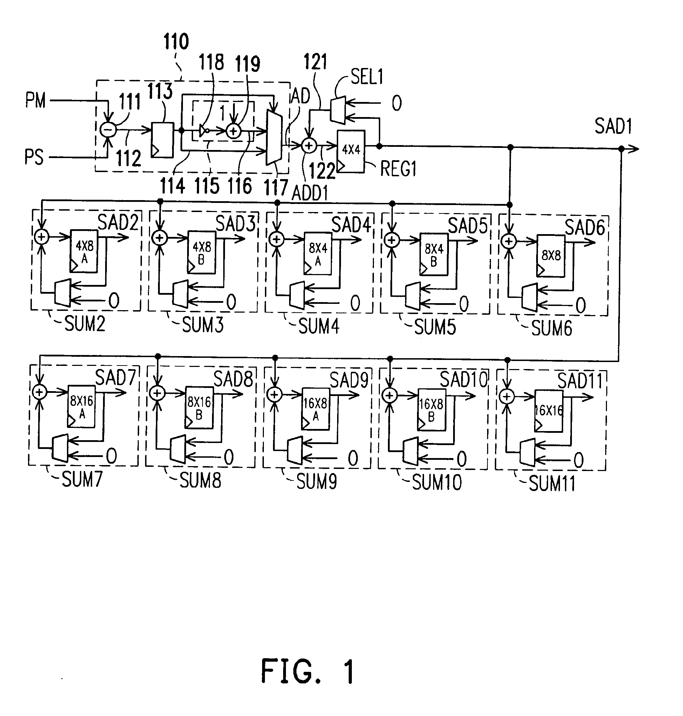

FIG. 1 is a circuit block diagram showing a circuit for computing SAD according to an embodiment of the present invention. Referring to FIG. 1, a first data PM, e.g. an image block data, and a second data PS, e.g. a to-be-compared image block diagram comprise series of data. The absolute difference circuit 110 receives the image block data PM and the to-be-compared image block data PS, and outputs an absolute difference data AD, wherein AD=|PM-PS|.

Following are the descriptions of the absolute difference circuit 110. The subtracter 111 receives the image block data PM as well as the to-be-compared image block data PS, and then subtracts the image block data PM from the to-be-compared image block data PS or subtracts the to-be-compared image block data PS from the image block data PM so as to output the difference value 112. The register 113 is coupled to the subtracter 111, locking the difference value 112 according to the preset timing sequence so as to output the difference value 114. The complement circuit 115 is coupled to the register 113 for generating the complement value 116 according to the difference value 114. The selective circuit 117 is coupled to the register 113 and the complement circuit 115 for receiving the difference value 114 and the complement value 116 of the difference value 114, and outputting the difference value 114 or the complement value 116 of the difference value 114 which is a positive value as the absolute difference data AD.

The complement circuit 115 comprises, for example, an inverter 118 and an adder 119. The inverter 118 receives and inverses the difference value 114. The adder 119 is coupled to the inverter 118 for receiving and adding the inversed difference value 114, and outputting the complement value 116 of the difference value 114.

The adder ADD 1 receives and adds the absolute difference data AD and the accumulative data 121, and outputs the accumulated result as the sum 122. The register REG1 locks the sum 122 according to the preset timing sequence, and outputs the SAD data SAD1. The selective circuit SEL1 receives and selects the SAD1 or 0, and outputs the selected data as the accumulative data 121.

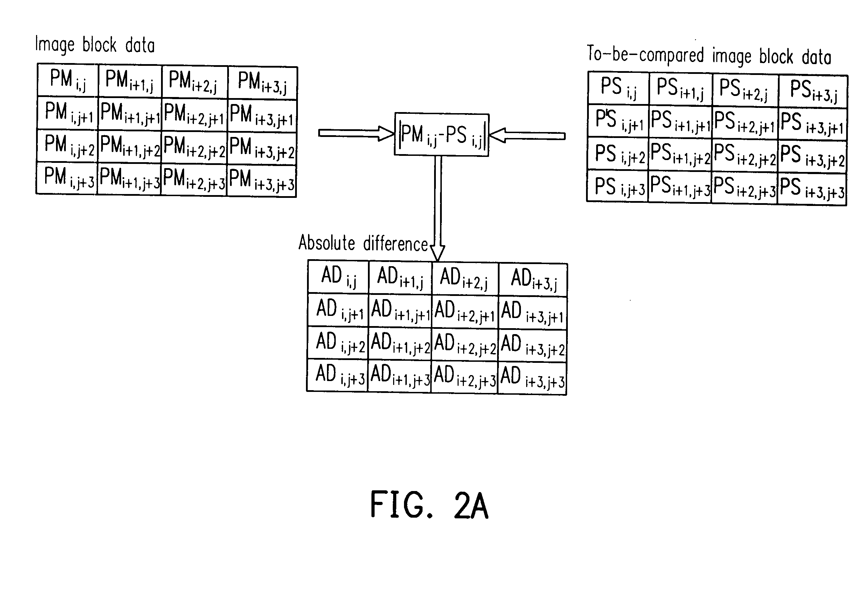

In this embodiment, the register REG1 stores the SAD of the 4x4 pixel. The computation of absolute difference of the image block data and the to-be-compared image block data according to an embodiment of the present invention is shown in FIG. 2A. Referring to FIG. 1 and FIG. 2A, the absolute difference circuit 110 receives the image block data PM and the to-be-compared image block data PS. The absolute difference circuit 110 receives the image block data PM and the to-be-compared image block data PS, and then generates the absolute difference data $AD_{i,j}$~$AD_{i+3,j+3}$ according to the formula: $AD_{i,j} = |PM_{i,j}-PS_{i,j}|$.

When the first absolute difference data $AD_{ij}$ of each one 4x4 is computed, the circuit SEL1 select 0 as the output. Thus, the register REG1 locks the computed result $AD_{ij}+0$ of the adder ADD1 as the output SAD1. After the absolute difference circuit 110 generates the second absolute difference data $AD_{i+1j}$, the selective circuit SEL1 selects and transmits the SAD1, i.e. $AD_{ij}$, outputted from the register REG1 to the adder ADD1. The register REG1 locks the computed result $AD_{ij}+AD_{i+1j}$ outputted from the adder ADD 1. Accordingly, after the absolute difference circuit 110 generates the last absolute difference data $AD_{i+3j+3}$ of the $4\times4$ pixel, the selective circuit SEL1 selects and transmits the SAD1, i.e. $AD_{ij}+ ... + AD_{i+2j+3}$, outputted from the register REG1 to the adder ADD1. The register REG1 locks the computed result

$$\sum_{i=0}^{3}\sum_{j=0}^{3}AD_{i,j}$$ outputted from the adder ADD1. The computation of SAD for the 4x4 pixel is completed.

According to an embodiment of the present invention, the circuit can also be adapted for computing SAD a variety of image block data, and is not limited to 4x4 pixel described above. In the present embodiment, the output terminal of the register REG1 is coupled to a plurality of sets of accumulative circuits SUM2-SUM11. The accumulative circuits compute the SAD by accumulating SAD1. For example, the accumulative circuits SUM2-SUM11 accumulate the SAD2-SAD11 of the 4x8 (left), 4x8(right), 8x4(top), $8\times4$(bottom), 8x8, 8x16(left), 8x16(right), $16\times8$(top), 16x8(bottom) and 16x16 image block data according to the preset timing sequence.

One of ordinary skill in the art will understand that the number of the accumulative circuits is not fixed. For example, if the SAD for the 4x4, 8x8 and $16\times16$ image block data are to be simultaneously computed, the accumulative circuits SUM2-SUM5 and SUM7-SUM10 shown in FIG. 1 maybe are not required. If the SAD of the 8x8 image block data is to be computed only, the accumulative circuits SUM2-SUM11 shown in FIG.

1 maybe are not required. By modifying the timing sequence of the selective circuit SEL1 for selecting 0, the register REG1 can output the SAD of the 8x8 image block data. These amendments described above fall within the scope of the present invention.

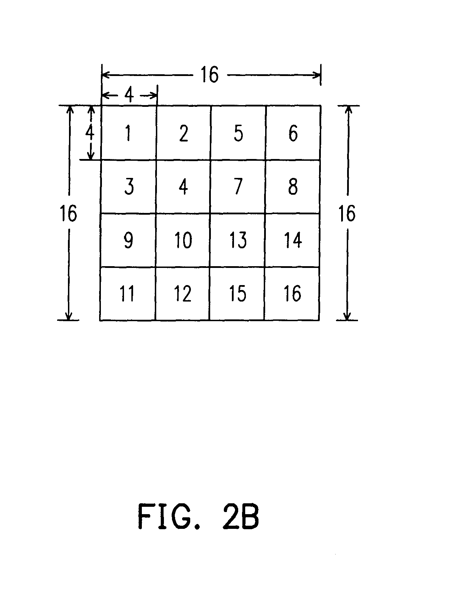

FIG. 2B is a schematic view showing a $16\times16$ image block is split into sixteen 4x4 image blocks, and the number of each 4x4 image block is the processing order. In this embodiment, the accumulative circuits SUM2-SUM11 are circuits similar to each other. Following is the description of the accumulative circuit SUM 11. The accumulative circuit SUM11 comprises an adder, a register and a selective circuit. The operations of the adder, the register and the selective circuit are similar to those of the adder ADD1, the register REG1 and the selective circuit SEL1, respectively. Therefore, detailed descriptions thereof are not repeated. The SUM11 compute the SAD of 16x16 image block by accumulating sixteen SAD of 4x4 image block, i.e. SAD1.

In the embodiment described above, the circuit of the present invention computes SAD for various image block data in a short time. Following is a description concerning the circuit area.

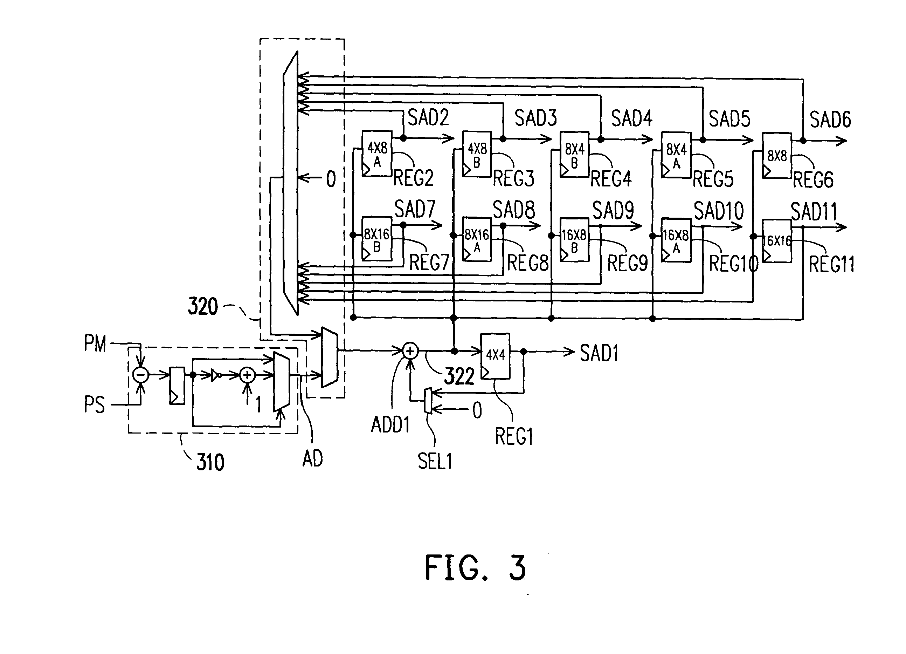

FIG. 3 is a schematic circuit block diagram showing a circuit for computing SAD according to another embodiment of the present invention. Referring to FIG. 3, the absolute circuit 310 receives the image block data PM and the to-be-compared image block data PS, and outputs the absolute difference data AD. The absolute difference circuit 310, the adder ADD1, the register REG1 and the selective circuit SEL1 are similar to the absolute difference circuit 110, the adder ADD 1, the register REG 1 and the selective circuit SEL1 shown in FIG. 1, respectively. Therefore, detailed descriptions thereof are not repeated.

Referring to FIG. 3, the selective circuit 320 is coupled between the absolute circuit 310 and the adder ADD1. In this embodiment, it is assumed that the register REG1 stores the SAD of the 4x4 pixel. The outputs, SAD2 to SAD11, are accumulated. According to an embodiment of the present invention, the circuit can also be adapted for computing SAD of a variety of image block data, and is not only limited to the 4x4 pixel described above.

One of ordinary skill in the art will understand that the number of the accumulative circuits is not fixed. For example, if the SAD for the 4x4, 8x8 and 16x16 image block data are to be simultaneously computed, the accumulative circuits SUM2-SUM5 and SUM7-SUM10 shown in FIG. 1 maybe are not required. If the sum of absolute difference of the 8x8 image block data is to be computed, the accumulative circuits SUM2-SUM11 shown in FIG. 1 maybe not required. By modifying the timing sequence of the selective circuit SEL1 for selecting 0, the register REG1 can output the sum of absolute difference for the 8x8 image block data. These embodiments described above fall within the scope of the present invention.

In this embodiment, the sequence of the data for the 4x4 pixel is shown in FIG. 2B. Referring to FIG. 2B and FIG. 3, after the adder ADD1 completes the SAD computation for the first 4x4 image block data in which the accumulative value 322 is the sum of absolute difference data of the 4x4 image block data, the registers REG2, REG4, REG6, REG7, REG9, REG11 and REG1 lock the accumulative value 322. After the adder ADD 1 completes the SAD computation for the second 4x4 image block data, REG3 and REG1 lock the accumulative value 322. The selective circuit 320 selects and outputs SAD4, SAD6, SAD7, SAD9 and SAD 11 to the adder ADD 1 for the adding computations with SAD 1 of the second 4x4 image block data so as to store the accumulative results. The register REG4 outputs SAD4 of the first 8x4 image block data. The other data are outputted according thereto. therefore, detailed descriptions thereof are not repeated.

The circuits for sum of absolute difference shown in FIGS. 1 and 3 are novel and have unique features, in that, the circuit shown in FIG. 1 is capable of computing sums of absolute difference of a variety of image block data in a short time and the circuit shown in FIG. 3 has a small circuit area. Following is a description of a circuit having complement features of the circuits shown in FIGS. 1 and 3.

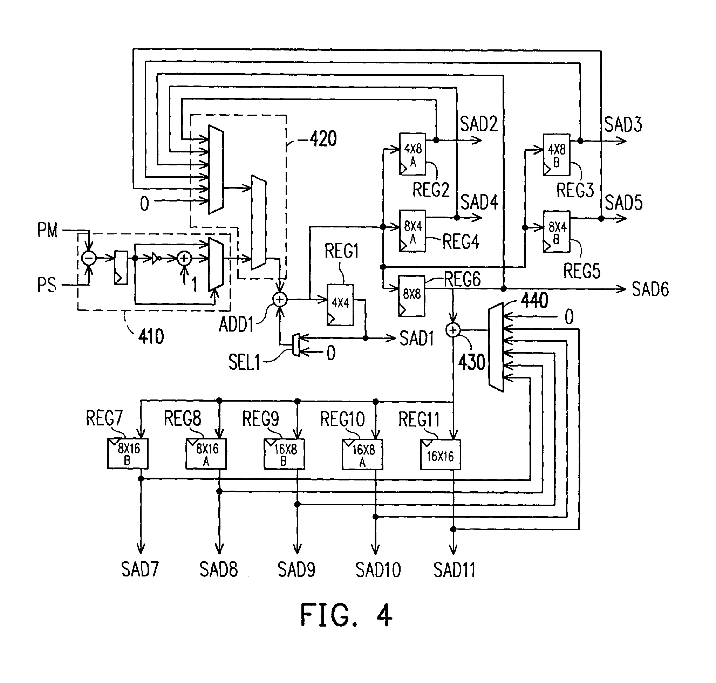

FIG. 4 is a schematic circuit block diagram showing a circuit for computing sums of absolute difference according to another embodiment of the present invention. Referring to FIG. 4, the absolute circuit 410 receives the image block data PM and the to-be-compared image block data PS, and outputs the absolute difference data AD. The absolute difference circuit 410, the adder ADD1, the registers REG1 to REG6 and the selective circuit SEL1 are similar to the absolute difference circuit 310, the adder ADD1, the registers REG1 to REG6 and the selective circuit SEL1 shown in FIG. 3, respectively. Therefore, detailed descriptions thereof are not repeated.

Referring to FIG. 4, the adder 430 is coupled to the output terminal of the register REG6, and receives SAD6 so as to perform adding computation with the selected data from the selective circuit 440. When the SAD computation of the 8x8 image block data is completed, the register REG6 locks the sum of absolute difference of the 8x8 image block data. The adder ADD1 accumulates the SAD6 to the register corresponding thereto by the switching of the selective circuit 440 before the ADD1 completely outputs the sum of absolute difference data of the 4x4 image block data. Compared with the circuit in FIG. 3, the circuit in this embodiment performs more efficiently though the selective circuit 440 and the adder 430 are added.

Although the present invention has been described in terms of exemplary embodiments, it is not limited thereto. Rather, the appended claims should be constructed broadly to include other variants and embodiments of the invention, which may be made by those skilled in the field of this art without departing from the scope and range of equivalents of the invention.

## Claims

1. A circuit for computing sums of absolute difference, comprising:

   an absolute difference circuit, for receiving a first data $PM_{i,j}$ and a second data $PS_{i,j}$, and outputting an absolute difference data $AD_{i,j}$, wherein $PM_{i,j}$, $PS_{i,j}$ and $AD_{i,j}$ represent a (i,j) data of the first data, the second data and the absolute difference data, respectively, and wherein $AD_{i,j} = |PM_{i,j} - PS_{i,j}|$, and i and j are integers not less than 0;
   a first adder, for receiving and adding the absolute difference data and a first accumulative data, and outputting a first sum;
   a register, for receiving and locking the first sum according to a first preset timing sequence, and outputting a first sum of absolute difference data; and
   a first selective circuit, for receiving and selecting the first sum of absolute difference data or a zero data, and outputting the selected data as the first accumulative data, wherein a value of the zero data is 0.

2. The circuit for computing sum of absolute difference of claim 1, wherein the absolute difference circuit comprises:

   a subtracter, for receiving the first data and the second data, and subtracting the first data from the second data or subtracting the second data from the first data so as to generate a difference value;
   a second register, coupled to the subtracter, for locking the difference value according to a second preset timing sequence;
   a complement circuit, coupled to the second register, for generating a complement value of the difference value; and
   a second selective circuit, coupled to the second register and the complement circuit, for receiving the difference value and the complement value of the difference value, and outputting the difference value or the complement value of the difference value which is a positive value as the absolute difference data.

3. The circuit for computing sums of absolute difference of claim 2, wherein the complement circuit comprises:

   an inverter, for receiving and inverting the difference value, and outputting an inversion difference value; and
a second adder, coupled to the inverter, for receiving and adding the inversion difference value and an one data so as to output the complement value of the difference value, wherein a value of the one data is 1.

4. The circuit for computing sums of absolute difference of claim 1, wherein the first sum of absolute difference data is an accumulation of a 4x4 array from $AD_{ij}$ to $AD_{i+3j+3}$.

5. The circuit for computing sums of absolute difference of claim 1, wherein the first register does not comprise a reset function.

6. The circuit for computing sums of absolute difference of claim 1, further comprising an accumulative circuit for receiving and accumulating the first sum of absolute difference data so as to output a second sum of absolute difference data, and accumulating the second sum of absolute difference data according to the preset timing sequence.

7. The circuit for computing sums of absolute difference of claim 6, wherein the accumulative circuit comprises:

   a third adder, for receiving and accumulating the first sum of absolute difference data and a third accumulative data, and outputting a third accumulative value;
   a third register, for receiving and locking the third accumulative value according to a third preset time sequence, and outputting the second sum of absolute difference data; and
   a third selective circuit, for receiving and selecting the second sum of absolute difference data or the zero data, and outputting the selected data as the third accumulative data.

8. The circuit for computing sums of absolute difference of claim 6, wherein the first sum of absolute difference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{3}\sum_{j=0}^{7} AD_{x+i,y+j}$ where $x \in$ {0,4,8,12}, $y \in$ {0,8}.

9. The circuit for computing sums of absolute difference of claim 6, wherein the 3 3 first sum of absolute dif-

ference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{7}\sum_{j=0}^{3} AD_{x+i,y+j}$ where $x \in$ {0,8}. $y \in$ {0,4,8,12}.

10. The circuit for counting sum of absolute difference of claim 6, wherein the first sum of absolute difference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{7}\sum_{j=0}^{7} AD_{x+i,y+j}$ where $x \in$ {0,8}, $y \in$ {0,8}.

11. The circuit for computing sums of absolute difference of claim 6, wherein the first sum of absolute difference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{7}\sum_{j=0}^{15} AD_{x+i,y+j}$ where $x \in$ {0,8}, $y \in$ {0}.

12. The circuit for computing sums of absolute difference of claim 6, wherein 3 3 the first sum of absolute difference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{15}\sum_{j=0}^{7} AD_{x+i,y+j}$ where $x \in$ {0}, $y \in$ {0,8}.

13. The circuit for computing sums of absolute difference of claim 6, wherein 3 3 the first sum of absolute difference data is $\displaystyle\sum_{i=0}^{3}\sum_{j=0}^{3} AD_{x+i,y+j}$ where $x \in$ {0,4,8,12}, $y \in$ {0,4,8,12}, and the second sum of absolute difference data is $\displaystyle\sum_{i=0}^{15}\sum_{j=0}^{15} AD_{x+i,y+j}$ where $x \in$ {0}, $y \in$ {0}.

**14.** The circuit for computing sums of absolute difference of claim 1, further comprising:

a fourth register, for receiving and locking the first accumulative value according to a fourth preset timing sequence, and outputting a third sum of absolute difference data; and a fourth selective circuit, coupled between the absolute difference circuit and the first adder, the fourth selective circuit also coupled to the fourth register for receiving and selecting the absolute difference data, the third sum of absolute difference data and the zero data, for outputting the selected data to the first adder for adding operation with the first accumulative data.

**15.** The circuit for computing sums of absolute difference of claim 14, wherein 3 3 the first sum of absolute difference data is $\sum_{i=0}^{3}\sum_{j=0}^{3} AD_{x+i,y+j}$ where $x \in \{0,4,8,12\}$, $y \in \{0,4,8,12\}$, and the third sum of absolute difference data is $\sum_{i=0}^{7}\sum_{j=0}^{7} AD_{x+i,y+j}$ where $x \in \{0,8\}$, $y \in \{0,8\}$.

**16.** The circuit for computing sums of absolute difference of claim 15, further comprising:

a fifth adder, for receiving and accumulating the third sum of absolute difference data and a fifth accumulative data, and outputting a fifth accumulative value; a fifth register, for receiving and locking the fifth accumulative value according to a fifth preset time sequence, and outputting the fourth sum of absolute difference data; and a fifth selective circuit, for receiving and selecting the fourth sum of absolute difference data or the zero data, and outputting the selected data as the fifth accumulative data.

**17.** The circuit for computing sums of absolute difference of claim 16, wherein the fourth sum of absolute difference data is $\sum_{i=0}^{7}\sum_{j=0}^{15} AD_{x+i,y+j}$ where $x \in \{0,8\}$, $y \in \{0\}$

**18.** The circuit for computing sums of absolute difference of claim 16, wherein the fourth sum of absolute difference data is $\sum_{i=0}^{15}\sum_{j=0}^{7} AD_{x+i,y+j}$ where $x \in \{0\}$, $y \in \{0,8\}$.

**19.** The circuit for computing sums of absolute difference of claim 16, wherein the fourth sum of absolute difference data is $\sum_{i=0}^{15}\sum_{j=0}^{15} AD_{x+i,y+j}$ where $x \in \{0\}$, $y \in \{0\}$.

**20.** The circuit for computing sums of absolute difference of claim 1, wherein the first data and the second data represent an image block data and a to-be-compared image block data, respectively.

**Amended claims in accordance with Rule 86(2) EPC.**

**1.** A circuit for computing sums of absolute difference, comprises an absolute difference circuit (110), for receiving a first data $PM_{i,j}$ and a second data $PS_{i,j}$, wherein the first data $PM_{i,j}$ and the second data $PS_{i,j}$ correspond to pixels in one of a plurality of image block data containing different pixel amount for a current motion frame and previous motion frame, respectively, and outputting an absolute difference data $AD_{i,j}$, wherein $PM_{i,j}$, $PS_{i,j}$ and $AD_{i,j}$ represent a (i, j) data of the first data, the second data and the absolute difference data, respectively, and wherein $AD_{i,j}=|PM_{i,j}-PS_{i,j}|$, and i and j are integers not less than 0 and start from 0; wherein the improvements comprise:

a plurality of adders (ADD1) (119), each of which receiving and adding the absolute difference data and a first accumulated data (121), and performing an calculation of $\sum_{i=0}^{i}\sum_{j=0}^{j} AD_{i,j}$ and outputting the calculated results as different sums of absolute difference data corresponding to the plurality of image block data; a plurality of registers (REG 1-11) (113), each of which corresponds one of the plurality of image block data, and receives and locks one of different sums (122) of absolute difference data, and outputting the one of different sums (122) of absolute difference data; and a plurality of selective circuits (SEL1), for receiving and selecting the one of different sums of absolute difference data or a zero data, and outputting the selected data as the first accumulated data (121), wherein the value of the zero data is 0.

**2.** The circuit for computing sum of absolute difference of claim 1, wherein the absolute difference circuit comprises:

a subtracter, for receiving the first data and the second data, and subtracting the first data from the second data or subtracting the second data from the first data so as to generate a difference value:

a second register, coupled to the subtracter, for locking the difference value according to a second preset timing sequence; a complement circuit, coupled to the second register, for generating a complement value of the difference value; and a second selective circuit, coupled to the second register and the complement circuit, for receiving the difference value and the complement value of the difference value, and outputting the difference value or the complement value of the difference value which is a positive value as the absolute difference data.

3. The circuit for computing sums of absolute difference of claim 2, wherein the complement circuit comprised:

an inverter, for receiving and inverting the difference value, and outputting an inversion difference value; and a second adder, coupled to the inverter, fro receiving and adding the inversion difference value and an one data so as to output the complement value of the difference value, wherein a value of the one data is 1.

4. The circuit for computing sums of absolute difference of claim 1, wherein the first sum of absolute difference data is an accumulation of a 4c4 array from $AD_{i,j}$ to $AD_{i+3,j+3}$.

5. The circuit for computing sums of absolute difference of claim 1, wherein the reset terminals of the plurality of registers (113) are open.

6. The circuit for computing sums of absolute difference of claim 1, further comprising an accumulative circuit for receiving and accumulating the first sum of absolute difference data so as to output a second sum of absolute difference data, and accumulating the second sum of absolute difference data according to the preset timing sequence.

7. The circuit for computing sums of absolute difference of claim 6, wherein the accumulative circuit comprises:

a third adder, for receiving and accumulating the first sum of absolute difference data and a third accumulative data, and outputting a third accumulative value; a third register, for receiving an locking the third accumulative value according to a third preset time sequence, and outputting the second sum of absolute difference data; and a third selective circuit, for receiving and selecting the second sum of absolute difference data or the zero data, and outputting the selected data as the third accumulative data.

8. The circuit for computing sums of absolute difference of claim 6, wherein the first sum of absolute difference data is $\sum_{i=0}^{3}\sum_{j=0}^{3}AD_{x+i,y+j}$ where $x \in \{0, 4, 8, 12\}$, $y \in \{0, 4, 8, 12\}$, and the second sum of absolute difference data is $\sum_{i=0}^{3}\sum_{j=0}^{7}AD_{x+i,y+j}$ where $x \in \{0, 4, 8, 12\}$, $y \in \{0, 8\}$.

9. The circuit for computing sums of absolute difference of claim 6, wherein the first sum of absolute difference data is $\sum_{i=0}^{3}\sum_{j=0}^{3}AD_{x+i,y+j}$ where $x \in \{0, 4, 8, 12\}$, $y \in \{0, 4, 8, 12\}$, and the second sum of absolute difference data is $\sum_{i=0}^{7}\sum_{j=0}^{3}AD_{x+i,y+j}$ where $x \in \{0, 8\}$, $y \in \{0, 4, 8, 12\}$.

10. The circuit for computing sums of absolute difference of claim 6, wherein the first sum of absolute difference data is $\sum_{i=0}^{3}\sum_{j=0}^{3}AD_{x+i,y+j}$ where $x \in \{0, 4, 8, 12\}$, $y \in \{0, 4, 8, 12\}$, and the second sum of absolute difference data is $\sum_{i=0}^{7}\sum_{j=0}^{7}AD_{x+i,y+j}$ where $x \in \{0, 8\}$, $y \in \{0, 8\}$.

11. The circuit for computing sums of absolute difference of claim 6, wherein the first sum of absolute difference data is $\sum_{i=0}^{3}\sum_{j=0}^{3}AD_{x+i,y+j}$ where $x \in \{0, 4, 8, 12\}$, $y \in \{0, 4, 8, 12\}$, and the second sum of absolute difference data is $\sum_{i=0}^{7}\sum_{j=0}^{15}AD_{x+i,y+j}$ where $x \in \{0, 8\}$, $y \in \{0\}$.

12. The circuit for computing sums of absolute difference of claim 6, wherein the first sum of absolute difference data is $\sum_{i=0}^{3}\sum_{j=0}^{3}AD_{x+i,y+j}$ where x ∈ {0, 4, 8, 12}, y ∈ {0, 4, 8, 12}, and the second sum of absolute difference data is $\sum_{i=0}^{15}\sum_{j=0}^{7}AD_{x+i,y+j}$ where x ∈ {0}, y ∈ {0, 8}.

**13.** The circuit for computing sums of absolute difference of claim 6, wherein the first sum of absolute difference data is $\sum_{i=0}^{3}\sum_{j=0}^{3}AD_{x+i,y+j}$ where x ∈ {0, 4, 8, 12}, y ∈ {0, 4, 8, 12}, and the second sum of absolute difference data is $\sum_{i=0}^{15}\sum_{j=0}^{15}AD_{x+i,y+j}$ where x ∈ {0}, y ∈ {0}.

**14.** The circuit for computing sums of absolute difference of claim 1, further comprising:

a fourth register, for receiving and locking the first accumulative value according to a fourth preset timing sequence, and outputting a third sum of absolute difference data; and
a fourth selective circuit, coupled between the absolute difference circuit and the first adder, the fourth selective circuit also coupled to the fourth register for receiving and selecting the absolute difference data, the third sum of absolute difference data and the zero data, for outputting the selected data to the first adder for adding operation with the first accumulative data.

**15.** The circuit for computing sums of absolute difference of claim 14, wherein the first sum of absolute difference data is $\sum_{i=0}^{3}\sum_{j=0}^{3}AD_{x+i,y+j}$ where x ∈ {0, 4, 8, 12}, y ∈ {0, 4, 8, 12}, and the third sum of absolute difference data is $\sum_{i=0}^{7}\sum_{j=0}^{7}AD_{x+i,y+j}$ where x ∈ {0, 8}, y ∈ {0, 8}.

**16.** The circuit for computing sums of absolute difference of claim 15, further comprising:

a fifth adder, for receiving and accumulating the third sum of absolute difference data and a fifth accumulative data, and outputting a fifth accumulative value;
a fifth register, for receiving and locking the fifth accumulative value according to a fifth preset time sequence, and outputting a fourth sum of absolute difference data; and
a fifth selective circuit, for receiving and selecting the fourth sum of absolute difference data or the zero data, and outputting the selected data to the fifth accumulative data.

**17.** The circuit for computing sums of absolute difference of claim 16, wherein the fourth sum of absolute difference data is $\sum_{i=0}^{7}\sum_{j=0}^{15}AD_{x+i,y+j}$ where x ∈ {0, 8}, y ∈ {0}.

**18.** The circuit for computing sums of absolute difference of claim 16, wherein the fourth sum of absolute difference data is $\sum_{i=0}^{15}\sum_{j=0}^{7}AD_{x+i,y+j}$ where x ∈ {0}, y ∈ {0, 8}.

**19.** The circuit for computing sums of absolute difference of claim 16, wherein the fourth sum of absolute difference data is $\sum_{i=0}^{15}\sum_{j=0}^{15}AD_{x+i,y+j}$ where x ∈ {0}, y ∈ {0}.

**20.** The circuit for computing sums of absolute difference of claim 1, wherein the first data and the second data represent an image block data and a to-be-compared image block data, respectively.

FIG. 1

To-be-compared image block data

| PS$_{i,j}$ | PS$_{i+1,j}$ | PS$_{i+2,j}$ | PS$_{i+3,j}$ |
|---|---|---|---|
| PS$_{i,j+1}$ | PS$_{i+1,j+1}$ | PS$_{i+2,j+1}$ | PS$_{i+3,j+1}$ |
| PS$_{i,j+2}$ | PS$_{i+1,j+2}$ | PS$_{i+2,j+2}$ | PS$_{i+3,j+2}$ |
| PS$_{i,j+3}$ | PS$_{i+1,j+3}$ | PS$_{i+2,j+3}$ | PS$_{i+3,j+3}$ |

Image block data

| PM$_{i,j}$ | PM$_{i+1,j}$ | PM$_{i+2,j}$ | PM$_{i+3,j}$ |
|---|---|---|---|
| PM$_{i,j+1}$ | PM$_{i+1,j+1}$ | PM$_{i+2,j+1}$ | PM$_{i+3,j+1}$ |
| PM$_{i,j+2}$ | PM$_{i+1,j+2}$ | PM$_{i+2,j+2}$ | PM$_{i+3,j+2}$ |
| PM$_{i,j+3}$ | PM$_{i+1,j+3}$ | PM$_{i+2,j+3}$ | PM$_{i+3,j+3}$ |

$|PM_{i,j} - PS_{i,j}|$

Absolute difference

| AD$_{i,j}$ | AD$_{i+1,j}$ | AD$_{i+2,j}$ | AD$_{i+3,j}$ |
|---|---|---|---|
| AD$_{i,j+1}$ | AD$_{i+1,j+1}$ | AD$_{i+2,j+1}$ | AD$_{i+3,j+1}$ |
| AD$_{i,j+2}$ | AD$_{i+1,j+2}$ | AD$_{i+2,j+2}$ | AD$_{i+3,j+2}$ |
| AD$_{i,j+3}$ | AD$_{i+1,j+3}$ | AD$_{i+2,j+3}$ | AD$_{i+3,j+3}$ |

FIG. 2A

FIG. 2B

FIG. 3

EP 1 729 518 A1

FIG. 4

**European Patent Office**

**EUROPEAN SEARCH REPORT**

Application Number

EP 05 01 1730

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/028681 A1 (CHOI SUNG-KYU) 11 October 2001 (2001-10-11) | 1 | H04N7/26 G06F7/544 |
| A | * paragraph [0068]; figure 2 * <br> * paragraph [0073]; figure 15 * | 2-20 | |
| A | US 2002/039386 A1 (HAN TAE-HEE ET AL) 4 April 2002 (2002-04-04) * paragraph [0052]; figures 7,10,11 * | 1-20 | |
| A | US 5 717 615 A (PIRSON ET AL) 10 February 1998 (1998-02-10) * column 9, line 23 - line 34 * | 1-20 | |
| A | US 5 793 655 A (HARLAP ET AL) 11 August 1998 (1998-08-11) * column 9, line 7 - line 19; figure 9 * | 1-20 | |

TECHNICAL FIELDS SEARCHED (Int.Cl.7)

H04N
G06F

The present search report has been drawn up for all claims

| Place of search | Date of completion of the search | Examiner |
|---|---|---|
| The Hague | 17 October 2005 | Cohen, B |

**ANNEX TO THE EUROPEAN SEARCH REPORT
ON EUROPEAN PATENT APPLICATION NO.**

EP 05 01 1730

This annex lists the patent family members relating to the patent documents cited in  the above-mentioned European search report.
The members are as contained in the European Patent Office EDP file on
The European Patent Office is in no way liable for these particulars which are merely  given for the purpose of information.

17-10-2005

| Patent document cited in search report | | Publication date | Patent family member(s) | | Publication date |
|---|---|---|---|---|---|
| US 2001028681 | A1 | 11-10-2001 | CN | 1316856 A | 10-10-2001 |
| | | | EP | 1120747 A2 | 01-08-2001 |
| | | | JP | 2001218215 A | 10-08-2001 |
| | | | KR | 2001076707 A | 16-08-2001 |
| US 2002039386 | A1 | 04-04-2002 | NONE | | |
| US 5717615 | A | 10-02-1998 | BR | 9505799 A | 06-01-1998 |
| | | | CN | 1131881 A | 25-09-1996 |
| | | | DE | 69521873 D1 | 30-08-2001 |
| | | | DE | 69521873 T2 | 08-11-2001 |
| | | | EP | 0717372 A1 | 19-06-1996 |
| | | | FR | 2728091 A1 | 14-06-1996 |
| | | | JP | 8251602 A | 27-09-1996 |
| | | | SG | 38893 A1 | 17-04-1997 |
| US 5793655 | A | 11-08-1998 | AU | 4636597 A | 15-05-1998 |
| | | | CA | 2269494 A1 | 30-04-1998 |
| | | | CN | 1238845 A | 15-12-1999 |
| | | | EP | 0972236 A1 | 19-01-2000 |
| | | | WO | 9818073 A1 | 30-04-1998 |
| | | | JP | 2000502481 T | 29-02-2000 |

EPO FORM P0459

For more details about this annex : see Official Journal of the European Patent Office, No. 12/82